# EUROPEAN PATENT APPLICATION

(11) **EP 4 327 918 A1**
(43) Date of publication of application: **28.02.2024**
(21) Application number: 22192089.5
(22) Date of filing: 25.08.2022
(51) Int. Cl.: B01D 63/02

(54) **DEVICE AND PROCESS FOR THE MANUFACTURE OF HOLLOW FIBER MEMBRANE BUNDLES**

(71) Applicant: Gambro Lundia AB, 226 43 Lund (SE)
(72) Inventor: Bauer, Ulrich, 72379 Hechingen (DE); Loeffler, Markus, 72379 Hechingen (DE); Ott, Gerd, 72393 Burladingen (DE); Alber, Tobias, 78559 Gosheim (DE)
(74) Representative: Perchenek, Nils

(57) **Abstract**

The present disclosure relates to devices and processes for the production of hollow fiber membrane bundles. The bundles are used for the manufacture of filtration and/or diffusion devices, e.g., capillary dialyzers.

## Description

### Technical Field

The present disclosure relates to devices and processes for the production of hollow fiber membrane bundles. The bundles are used for the manufacture of filtration and/or diffusion devices, e.g., capillary dialyzers.

### Description of the Related Art

US 4 276 687 A discloses a process for the production of hollow fiber bundles which involves winding the fibers onto a reel member to form an annular assembly of the fibers and thereafter cutting the annular assembly into separate bundles. Individual bundles are wrapped in a flexible sheet and cut at their ends.

US 6 951 611 A discloses a method for manufacturing a hollow fiber membrane module which involves filter housings having first and second portions flexibly connected to each other. The filter housings are mounted on a winding wheel; hollow fibers are continuously fed to the first portions of the filter housings as the wheel is rotated; and subsequently the first and second portions of the filter housing are joined.

WO 2016/102364 A1 discloses an apparatus for winding a foil around a strand of hollow fiber membranes having an irregular cross-section and for forming the strand to circular bundles. The device comprises at least four form segments which can be moved towards the center of a circle individually. The contours of their profiles form a closed line of approximately circular shape when the segments are moved.

US 4 224 094 A discloses a method and apparatus for the simultaneous preparation of several hollow fiber devices, wherein at least one hollow fiber is wound around means, at least three in number, located in different planes thereby obtaining with this fiber an envelope having a polygonal section, which can be cut in at least two places as it is formed, so as to obtain at least two distinct groups of hollow fiber lengths.

### Summary

The present disclosure provides devices and processes for the production of bundles of hollow fiber membranes. The device of the present disclosure is configured to hold a bundle of hollow fiber membranes and comprises a base and a lid connected to the base via hinges. Both the base and the lid feature a trough in the shape of a cylinder section. The cylinder sections of the base and the lid together form a full cylinder when the device is in a closed configuration. Where base and lid contact each other in the closed configuration of the device, both the base and the lid feature longitudinal edges having the form of a periodic curve oscillating around a mean value instead of straight longitudinal edges.

### Brief Description of the Drawings

- Figure 1: shows perspective views of a prior art device for producing bundles of hollow fiber membranes: a) open configuration, b) closed configuration;
- Figure 2: shows perspective views of an embodiment of the device of the present disclosure: a) open configuration, b) closed configuration;
- Figure 3: shows a side view of an embodiment of the device of the present disclosure in closed configuration;
- Figure 4: shows cross-sectional views of the device of Figure 3: a) along line A-A, b) along line N-N.

### Detailed Description

The present disclosure provides a device for the production of a bundle of hollow fiber membranes. One embodiment is a device configured to receive and hold a bundle of hollow fiber membranes. The device comprises a base and a rigid lid connected to the base via hinges. The lid can be rotated around the respective hinge, to move the lid between a first position corresponding to an open configuration of the device, and a second position corresponding to a closed configuration of the device.

Both the base and the lid feature a trough in the shape of a cylinder section. The cylinder sections of the base and the lid together form a full cylinder when the device is in a closed configuration. In other words, in the closed configuration, the inner surfaces of the device, that is, the inner surfaces of the troughs of the base and the lid are positioned on the surface area of a cylindrical void. The inner surface of the device completely covers the surface of the cylindrical void, i.e., the inner surface of the device forms a cylinder.

It is an advantage of such a device that it can easily be mounted onto and dismounted from a winding wheel for collecting a strand of hollow fiber membranes, and that it can be re-used for the production of hollow fiber membrane bundles multiple times.

The lid of the device is opened prior to introducing the hollow fibers into the device, and closed after the desired number of hollow fiber membranes has been collected. To prevent hollow fiber membranes present in the device from being caught between the base and the lid of the device when the lid is closed, and from being deformed or damaged as a result, the contours of the edges of base and lid contacting each other take a particular form in the device of the present disclosure. Where base and lid contact each other in the closed configuration of the device, both the base and the lid feature longitudinal edges having the form of a periodic curve oscillating around a mean value instead of straight longitudinal edges.

In one embodiment, the periodic curve corresponds to a cosine curve, A*cos(x), having maxima at both ends of the device. In another embodiment, the periodic curve corresponds to an inverted cosine curve, A*(-cos(x)), having minima at both ends of the device. In still another embodiment, the periodic curve corresponds to a sine curve, A*sin(x), the amplitude of the curve corresponding to the mean value at both ends of the device. In another embodiment, the periodic curve is comprised of consecutive circular or ellipsoidal segments in alternating orientation. In one embodiment, a central angle of each of the segments is equal to or less than 180°, for instance, from 60° to 90°, e.g., from 70 to 80°. In a particular embodiment, the periodic curve is comprised of a sequence of circular segments in alternating orientation and with identical radius, the radius being in the range of from 10 mm to 30 mm, e.g., from 15 to 20 mm.

In one embodiment, the length of the device corresponds to an integer number of periods of the periodic function. In a further embodiment, the integer is in the range of from 2 to 12, for instance, from 4 to 8.

In one embodiment, the amplitude of the periodic function, measured from the line representing the mean value, is in the range of from 4 mm to 20 mm, e.g., from 5 mm to 15 mm.

Due to the specific form of the longitudinal edges of the base and the lid, the contributions of the lid and the base to the cylinder vary over the length of the cylinder, oscillating between two limit values. In one embodiment, the contributions of the lid and the base on average correspond to 180° of the full circle. In another embodiment, the trough of the lid constitutes a smaller fraction of the full cylinder than the trough of the base. In one embodiment, the average contribution of the lid corresponds to 90° to 160° of the full circle (360°), and the average contribution of the base corresponds to from 200° to 270° of the full circle. In another embodiment, the average contribution of the lid corresponds to from 120° to 150° of the full circle, and the average contribution of the base corresponds to from 210° to 270° of the full circle. In one embodiment, the contribution of the lid varies between 100° and 150° of the full circle over the length of the cylinder, the contribution of the base varies between and between 210° and 260° of the full circle over the length of the cylinder.

In the closed configuration, the inner surface of the device forms a cylinder. In one embodiment, the diameter of the cylinder is in the range of from 30 mm to 50 mm, for instance, from 35 to 45 mm. In a particular embodiment, the inner diameter is in the range of from 35 mm to 38 mm.

The present disclosure also provides a winding wheel equipped with a plurality of devices as described above. In one embodiment, the winding wheel is equipped with 4 to 30 devices. In one embodiment, the winding wheel additionally comprises means for moving the lid of the devices back and forth between the first position and the second position, i.e., changing the configuration of the devices between the open and the closed configuration, and between the closed and the open configuration. The winding wheel allows for the simultaneous production of multiple bundles of hollow fiber membranes.

The present disclosure also provides a process for preparing a bundle of hollow fiber membranes. The process involves providing a device of the present disclosure in an open configuration, collecting a plurality of hollow fiber membranes in the trough of the device to produce a bundle of hollow fiber membranes, subsequently closing the lid of the device to confine the bundle of hollow fiber membranes in the cylindrical void of the device, and subsequently cutting the bundle of hollow fiber membranes at both ends of the device to obtain a bundle of hollow fiber membranes having a defined length.

One embodiment of the process employs a plurality of devices of the present disclosure. The devices are mounted on a winding wheel to simultaneously produce a plurality of bundles of hollow fiber membranes. In the process, a plurality of hollow fiber membranes is introduced into each of the plurality of devices by winding a strand of hollow fiber membranes onto the winding wheel into the troughs of the devices.

In one embodiment, the process involves feeding a strand of hollow fiber membranes to a winding wheel and collecting the strand of hollow fiber membranes in devices of the present disclosure in their open configuration arranged on the outer circumference of the winding wheel by turning the wheel. As soon as the desired fiber bundle thickness or fiber bundle size has been reached, the winding wheel is stopped, the devices are closed around the strand of hollow fiber membranes and subsequently the hollow fiber membranes are cut between the devices. The devices are removed from the winding wheel and the bundles of hollow fiber membranes are transferred into tubular filter casings.

In one embodiment, the devices feature means that facilitate opening and closing of the lid, e.g., handles, knobs, or rollers attached to the lid. In the course of the process, the devices are opened and closed as required, e.g. using a robot. In one embodiment, a winding wheel having a plurality of devices mounted thereon is equipped with means which mechanically close or open, as required for the respective process step, the lids of the individual devices as the winding wheel rotates.

Exemplary embodiments of the device and the process of the present disclosure are further described hereafter with reference to the drawings. Throughout the figures, the same reference signs are used to refer to similar features.

It will be understood that the features mentioned above and those described hereinafter can be used not only in the combination specified but also in other combinations or on their own, without departing from the scope of the present invention.

### Detailed Description of the drawings

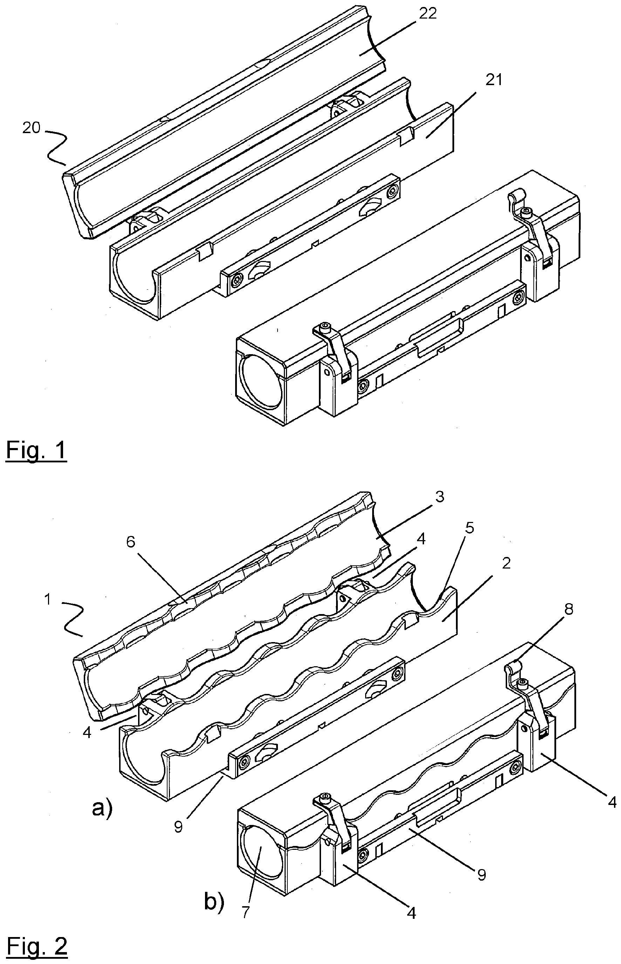

Figure 1 shows two perspective views of a prior art device 20 for producing bundles of hollow fiber membranes. Drawing a) shows the device 20 in open configuration, drawing b) in closed configuration (rotated by 180° around the z axis). The device 20 comprises an elongated base 21 featuring a trough having the shape of a cylinder section. On one longitudinal side of the base 21, a lid 22 is located. As can be seen in drawing b), the trough of base 21 and the inner surface of the lid 22 together frame a cylindrical void when the device 20 is in closed configuration. The diameter of cylindrical void of the device 20 is 37 mm.

Figure 2 shows two perspective views of an embodiment of the device 1 of the present disclosure. Drawing a) shows the device 1 in open configuration, drawing b) in closed configuration (rotated by 180° around the z axis). The device 1 comprises an elongated base 2 featuring a trough having the shape of a cylinder section. On one longitudinal side of the base 2, a lid 3 is located. The inner surface of the lid 3 forms a cylinder section. The lid 3 is connected to the base 2 via hinges 4, so that the lid 3 is moveable between a first position (corresponding to the open configuration), shown in drawing a) and a second position (corresponding to the closed configuration) shown in drawing b). A plurality of fibers can be introduced into the device when the lid 3 is in the first position. When the lid 3 is in the second position, as in drawing b), the trough of base 2 and the inner surface of the lid 3 together frame a cylindrical void 7. The longitudinal edges 5 of the base 2 and the longitudinal edges 6 of the lid 3 are shaped in the form of a periodic curve oscillating around a mean value. The shapes of the longitudinal edges 5 and 6 correspond to each other, so that the base 2 and the lid 3 form a tight fit when the device 1 is in closed configuration. The device 1 also features a handle 8 for opening and closing the device 1. The base 2 is connected to an assembly plate 9 which facilitates mounting of the device 1 on a winding wheel.

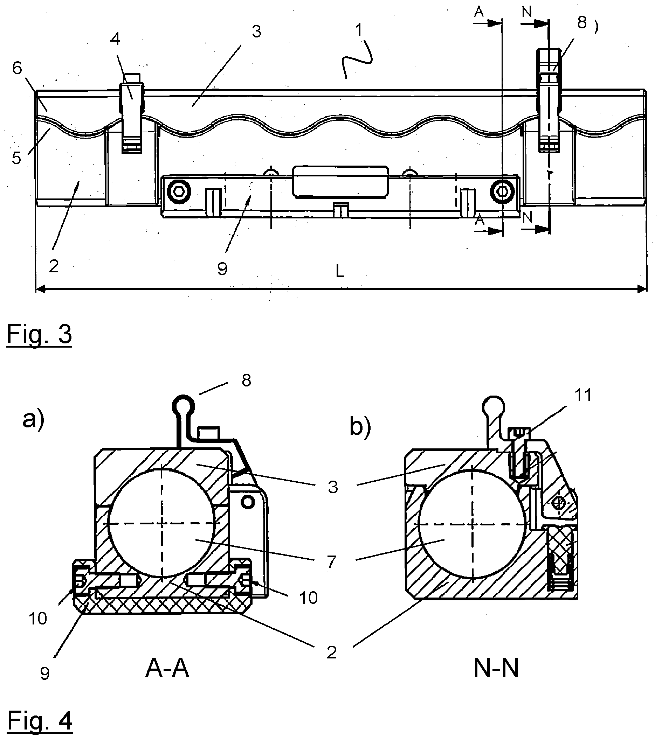

Figure 3 shows a side view of an embodiment of the device 1 of the present disclosure in closed configuration. L is the overall length of thew device. In the embodiment shown in the figure, the wavelength of the periodic curve formed by longitudinal edges 5 and 6, respectively, is L/6, i.e., the length of the edges 5 and 6, respectively, correspond to six full periods of the curve. In the embodiment shown in the figure, the length L of the device is 265 mm, and the periodic curve is comprised of a sequence of circular segments having a radius of 18 mm each. In the embodiment shown in the figure, the curve has maxima at both ends of the device 1. In other embodiments of the device 1, the curve has minima at both ends of the device 1.

Figure 4 shows cross-sectional views of the device 1 of Figure 3: a) along line A-A, b) along line N-N. The assembly plate 9 is attached to base 2 with bolts 10, the handle 8 is fixed to the lid 3 with bolt 11.

As is evident from drawings a) and b), respectively, the contributions of the lid 3 and the base 2 to the cross-section of cylinder 7 vary over the length of the cylinder 7. At section N-N shown in drawing b), which corresponds to a maximum of the periodic curve, the contribution of the lid 3 to the cross-section of the cylinder 7 is smaller than at section A-A shown in drawing a) which is near a minimum of the periodic curve. In the embodiment shown in the figure, the diameter of the cylindrical void 7 of the device is 37 mm.

### Examples

### Comparative Example 1

Using a winding wheel equipped with prior art devices 20 as shown in Fig. 1, hollow fiber membrane bundles comprising 12024 hollow fibers each were produced and subsequently transferred into dialyzer housings. The hollow fiber membrane bundles then were inspected for flaws like loops, kinks, fractures, etc.

72 dialyzers were analyzed. In total, 128 defects were observed, corresponding to an average of 1.78 defects per bundle.

### Example 1

Using a winding wheel equipped with devices 1 as shown in Figs. 2 to 4, hollow fiber membrane bundles comprising 12024 hollow fibers each were produced and subsequently transferred into dialyzer housings. The bundles then were inspected for defects like loops, kinks, fractures, etc.

117 dialyzers were analyzed. In total, 140 defects were observed, corresponding to an average of 1.20 defects per bundle.

Using the device of the present disclosure, the number of defects present in the bundles is reduced by about one third, as compared to bundles produced using the prior art device.

### List of reference signs

- 1: device of the present disclosure
- 2: base
- 3: lid
- 4: hinge
- 5: longitudinal edge of base
- 6: longitudinal edge of lid
- 7: cylindrical void
- 8: handle
- 9: assembly plate
- 10: bolt
- 11: bolt
- 20: prior art device
- 21: base
- 22: lid

## Claims

1. A device (1) for producing a bundle of hollow fiber membranes, comprising
a base (2) featuring a trough in the shape of a cylinder section; and
a rigid lid (3) with a bottom surface featuring a cylinder section and being connected to the base (2) via at least one hinge (4), so that the lid (3) is moveable between a first position and a second position, wherein the device (1) is configured to receive a plurality of hollow fiber membranes when the lid (3) is in the first position, and
the base (2) and the lid (3) together frame a cylindrical void (7) when the lid (3) is in the second position, **characterized in that** both the base (2) and the lid (3) feature longitudinal edges (5, 6) having the form of a periodic curve oscillating around a mean value where base (2) and lid (3) contact each other when the lid (3) is in the second position.

2. The device (1) of claim 1, wherein the periodic curve corresponds to a cosine curve.

3. The device (1) of claim 1, wherein the periodic curve corresponds to an inverted cosine curve.

4. The device (1) of claim 1, wherein the periodic curve corresponds to a sine curve.

5. The device (1) of claim 1, wherein the periodic curve is comprised of consecutive circular or ellipsoidal segments in alternating orientation.

6. The device (1) of claim 5, wherein the periodic curve is comprised of consecutive circular segments with identical radius in alternating orientation.

7. The device (1) of claim 6, wherein the radius is in the range of from 10 mm to 30 mm.

8. The device (1) of any one of claims 1 to 7, wherein the length of the device (1) corresponds to an integer number of periods of the periodic function.

9. The device (1) of claim 8, wherein the number is in the range of from 2 to 12.

10. The device (1) of any one of claims 1 to 9, wherein the diameter of the cylindrical void (7) is in the range of from 30 mm to 50 mm

11. A winding wheel equipped with a plurality of devices (1) according to any one of claims 1 to 10.

12. The winding wheel of claim 11, additionally comprising means for moving the lids (3) of the devices (1) back and forth between the first position and the second position.

13. A process for preparing a bundle of hollow fiber membranes, comprising a) providing at least one device (1) according to any one of claims 1 to 10 with the lid (3) in the first position; b) collecting a plurality of hollow fiber membranes in the trough of the base (2) of the device (1) to produce a bundle of hollow fiber membranes; c) subsequently closing the lid (3) of the device (1) to confine the bundle of hollow fiber membranes in the cylindrical void (7) of the device (1), and d) subsequently cutting the bundle of hollow fiber membranes at both ends of the device (1) to obtain a bundle of hollow fiber membranes having a defined length.

14. The process of claim 13, employing a plurality of devices (1) according to any one of claims 1 to 10 mounted on the outer circumference of a winding wheel to simultaneously produce a plurality of bundles of hollow fiber membranes, wherein a plurality of hollow fiber membranes is introduced into each device (1) by winding a strand of hollow fiber membranes onto the winding wheel into the troughs of the bases (2) of the devices (1) by turning the winding wheel; subsequently cutting the hollow fiber membranes in between the individual devices (1).

15. The process of claim 14, wherein the winding wheel is equipped with means configured to mechanically close or open, as required for the respective process step, the lids (3) of the individual devices (1) as the winding wheel rotates.
